# EUROPÄISCHE PATENTSCHRIFT

(11) **EP 1 268 271 B1**
(45) Veröffentlichungstag und Bekanntmachung des Hinweises auf die Patenterteilung: **03.09.2003**
(21) Anmeldenummer: 01927594.0
(22) Anmeldetag: 26.03.2001
(51) Int. Cl.: B63H 23/30, F16H 61/02, F16D 48/06

(54) **SCHIFFSGETRIEBE UND VERFAHREN ZUR VERMEIDUNG EINES MOTORDREHZAHLABFALLS BEIM EINSCHALTEN EINER LAMELLENKUPPLUNG**
MARINE GEAR AND A METHOD FOR PREVENTING A DROP IN MOTOR SPEED WHEN ENGAGING A MULTI-PLATE CLUTCH
BOITE DE VITESSES DE BATEAU ET PROCEDE POUR EVITER LA CHUTE DE REGIME DU MOTEUR LORS DE L'ENCLENCHEMENT D'UN EMBRAYAGE A DISQUES MULTIPLES

(30) Priorität: 27.03.2000 DE 10014768
(43) Veröffentlichungstag der Anmeldung: 02.01.2003
(73) Patentinhaber: Reintjes GmbH, 31785 Hameln (DE)
(72) Erfinder: DAUS, Jürgen, 37619 Hehlen (DE); LUX, Hans-Harald, 37620 Halle (DE)
(74) Vertreter: Thömen, Uwe, Dipl.-Ing.
(86) Internationale Anmeldenummer: DE0101142
(87) Internationale Veröffentlichungsnummer: WO01072586

(56) Entgegenhaltungen:
- DE-A- 3 505 992
- DE-A- 4 019 687
- US-A- 4 253 414
- PATENT ABSTRACTS OF JAPAN vol. 1999, no. 01, 29. Januar 1999 (1999-01-29) -& JP 10 278890 A (YAMAHA MOTOR CO LTD), 20. Oktober 1998 (1998-10-20)
- PATENT ABSTRACTS OF JAPAN vol. 010, no. 130 (M-478), 14. Mai 1986 (1986-05-14) -& JP 60 256629 A (KAWASAKI HEAVY IND LTD), 18. Dezember 1985 (1985-12-18)
- PATENT ABSTRACTS OF JAPAN vol. 010, no. 331 (M-533), 11. November 1986 (1986-11-11) -& JP 61 135899 A (YANMAR DIESEL ENGINE CO LTD), 23. Juni 1986 (1986-06-23)
- GOODBAR J E ET AL: "THE DESIGN AND DEVELOPMENT OF A FOUR SPEED POWERSHIFT TRANSMISSION WITH ELECTRONIC CLUTCH PRESSURE MODULATION" SAE TECHNICAL PAPER SERIES, SOCIETY OF AUTOMOTIVE ENGINEERS, 8. September 1986 (1986-09-08), Seiten 1-12, XP000199777 WARRENDALE, PA, US ISSN: 0148-7191

## Beschreibung

Die Erfindung betrifft ein Schiffsgetriebe nach dem Oberbegriff des Anspruchs 1 und ein Verfahren zur Vermeidung eines Motordrehzahlabfalls beim Einschalten einer Lamellenkupplung eines Schiffsgetriebes nach dem Oberbegriff des Anspruchs 11.

Bekannt sind zwischen Motor, insbesondere Dieselmotor, und Propeller angeordnete Schiffsgetriebe, die hydraulisch steuerbar und wahlweise betätigbare, als Lamellenkupplungen ausgebildete Vorwärts- und Rückwärtskupplungen aufweisen.

Eine Lamellenkupplung umfasst mehrere Lamellenscheiben, von denen eine erste Anzahl im Eingriff mit der Antriebswelle des Motors und eine zweite Anzahl im Eingriff mit der Antriebs- bzw. Abtriebswelle für den Propeller ist.

Dabei ist von mehreren nebeneinander angeordneten Lamellenscheiben jeweils eine mit der einen Antriebswelle vom Motor und die benachbarte Lamellenscheibe mit der anderen Abtriebswelle für den Propeller in Eingriff.

Zum Schließen der Lamellenkupplung werden die Lamellenscheiben durch einen vorgegebenen Kupplungsöldruck gegeneinander gepresst. Bei diesem Einschalten der Lamellenkupplung läuft der Dieselmotor im Teil-Last-Betrieb, und zwar solange, bis der Kupplungsvorgang beendet ist, bis also alle Lamellenscheiben der Lamellenkupplung aneinander gepresst sind. Dies kann fünf Sekunden oder länger dauern.

Der Kupplungsöldruck wird auch als Schalt- oder Betriebsdruck bezeichnet.

Der Aufbau des Betriebsdrucks erfolgt nach einer sogenannten Druckaufbaukurve. Dabei wird der Betriebsdruck nicht sofort schnell mit einer steilen Druckaufbaukurve und einem eventuellen Überschwinger aufgebaut, sondern langsamer, um den Dieselmotor und die gesamte Antriebsanlage zu schonen.

Der Dieselmotor kann ein zu schnelles Einschalten der Kupplung nicht verkraften, weil dafür im Teil-Last-Betrieb des Dieselmotors das Motorleistungsvermögen nicht ausreicht. Ein schnelles Einschalten der Kupplung führt zu einem unerwünschten Drehzahlabfall am Motor und im Extremfall zum Stillstand des Motors.

Man hat bisher eine Druckaufbaukurve, nach welcher der Kupplungsöldruck zum Zusammenpressen der Lamellenscheiben aufgebaut wird, theoretisch durch Ausprobieren und anhand von Versuchen vorgegeben, unter Berücksichtigung der vorhandenen Bedingungen wie Motorleistung, Schwungmasse des Motors usw..

Wenn diese Druckaufbaukurve einmal ermittelt und eingestellt ist, wird sie stets unverändert beibehalten, und zwar unabhängig von äußeren Faktoren und Parametern.

Zum Öffnen der Lamellenkupplung wird der Betriebsdruck abgeschaltet und die Lamellenscheiben durch einen eingestellten Federdruck einer Rückstellfeder entlastet.

Es ist bekannt, den Kupplungsöldruck soweit abzusenken, dass ein gezielter Rutschvorgang der Lamellen aufrechterhalten wird.

Über eine rutschende Lamellenkupplung lässt sich bei konstanter Motordrehzahl Einfluss auf die Propellerdrehzahl nehmen. Das ist dann sinnvoll, wenn bei konstanter Getriebeübersetzung die Schiffsgeschwindigkeit bei kleinster Motordrehzahl noch zu groß ist. Durch das Rutschen der Lamellen kann dann die Propellerdrehzahl vermindert werden. Ein derartiger Betriebszustand des Schiffsgetriebes wird auch als Trolling-Betrieb bezeichnet.

Üblicherweise ist dazu ein Druckbegrenzungsventil in der zur Lamellenkupplung führenden Druckölleitung angeordnet, über das ein gewünschter Betriebsdruck einstellbar ist. Bei nicht maximalen Betriebsdruck rutscht die Lamellenkupplung.

Aus der DE 40 19 687 Al ist ein Schiffsgetriebe bekannt, bei dem zu diesem Zweck zwischen Druckbegrenzungsventil und Lamellenkupplung ein Wegeventil angeordnet ist. In einer ersten Arbeitsstellung des Wegeventils stellt sich in der Druckölleitung der zum Trolling-Betrieb erforderliche Betriebsdruck ein. In einer zweiten Arbeitsstellung wird dagegen der maximale Betriebsdruck zum vollständigen Schließen der Lamellenkupplung hervorgerufen. Das Wegeventil wird von dem Druckbegrenzungsventil mit einem bestimmten Mindeststeuerdruck hydraulisch in die erste Arbeitsstellung bewegt. Das Erreichen dieses Mindeststeuerdrucks hängt von der Einstellung des Druckbegrenzungsventils ab. Das Druckbegrenzungsventil ist beispielsweise ein Proportionalventil, das mit einer elektronischen Steuereinheit elektrisch verbunden ist. Die elektronische Steuereinheit ist wiederum an einen Drehzahlaufnehmer angeschlossen, mit dem sich die aktuelle Drehzahl der Motorwelle erfassen lässt. An der elektronische Steuereinheit lässt sich ein Sollwert einstellen, bei dessen Überschreiten das Druckreduzierventil angesteuert wird.

Bei diesem sogenannten Trolling-Betrieb wird ebenfalls eine Druckaufbaukurve, nach welcher der Betriebsdruck zum Rutschen der Lamellenscheiben aufgebaut wird, theoretisch durch Ausprobieren und anhand von Versuchen vorgegeben. Wenn die Druckaufbaukurve für den Trolling-Betrieb einmal ermittelt und eingestellt ist, wird sie stets unverändert beibehalten. Die elektronische Steuereinheit dient lediglich dazu, das Über- und Unterschreiten einer vorgegebenen Motordrehzahl zu überwachen.

Der Erfindung liegt die Aufgabe zugrunde, ein gattungsgemäßes Schiffsgetriebe und ein Verfahren zum Einschalten der Lamellenkupplung eines gattungsgemäßen Schiffsgetriebes in der Weise zu verbessern, dass einem durch das Einschalten der Lamellenkupplung verursachter Abfall der Motordrehzahl entgegengewirkt wird.

Diese Aufgabe wird bei einem Schiffsgetriebe mit den Merkmalen des Anspruchs 1 und bei einem Verfahren zur Vermeidung eines Motordrehzahlabfalls beim Einschalten der Lamellenkupplung mit den Merkmalen des Anspruchs 11 gelöst.

Weiterbildungen und vorteilhafte Ausgestaltungen der Erfindung ergeben sich aus den jeweiligen Unteransprüchen.

Das gattungsgemäße Schiffsgetriebe umfasst eine hydraulische Steuerungsanordnung und eine elektronische Steuereinheit. Die hydraulische Steuerungsanordnung ist mit regelbaren Lamellenkupplungen für Vorwärts- und Rückwärtsfahrt versehen, bei denen der zum Einschalten der Lamellenkupplungen erforderliche Betriebsdruck über Steuermittel in Abhängigkeit wählbarer Parameter einstellbar ist. Die elektronische Steuereinheit dient der Erfassung und Verarbeitung wenigstens eines Betriebsparameters sowie der Ansteuerung der Steuermittel.

Erfindungsgemäß zeichnet sich das gattungsgemäße Schiffsgetriebe dadurch aus, dass das Steuermittel ein Proportionalventil und ein an der zur Lamellenkupplung führenden Druckölleitung angeordnetes vorgesteuertes Druckbegrenzungsventil zur Einstellung des gewünschten Betriebsdruckes umfasst. Das Proportionalventil ist durch einen elektrischen Steuerstrom der elektronischen Steuereinheit ansteuerbar. Das Duckbegrenzungsventil ist durch einen vom Proportionalventil erzeugten Steuerdruck betätigbar. Die elektronische Steuereinheit ist mit einem Sensor zur Erfassung der Motordrehzahl und/oder mit einem Sensor zur Erfassung des Load-Signals des Motors verbunden.

Das in Fachkreisen bekannte Load-Signal bezeichnet allgemein die Auslastung des Motors bzw. das jeweilige Leistungsvermögen/die jeweilige Leistungskenngröße des Motors.

Dabei macht sich die Erfindung den Umstand zu Nutze, dass die Hersteller von Schiffsmotoren den jeweiligen Schiffsmotoren ein sogenanntes Motormanagement bzw. Motorregler beigeben, aufgrund dessen das Load-Signal erhalten wird. Der Motorregler (Motormanagement) dient zum Einstellen der Drehzahl. Wenn mehr Kraftstoffmenge bei höherer Drehzahl zugeführt wird, dann braucht der Motor auch mehr Luft. All dies organisiert der Motorregler. Das Load-Signal liegt beispielsweise in Form einer Messgröße als Strom von 0 - 200 mA vor.

Durch die kombinatorische Anordnung aus vorgesteuertem Druckbegrenzungsventil und elektrisch betätigbaren Proportionalventil wird erreicht, dass ein von der elektronischen Steuereinheit an das Proportionalventil abgegebener elektrischer Steuerstrom direkt in einen Betriebsdruck umsetzbar ist.

Der aktuelle Betriebsdruck ist dabei proportional zur Höhe des am Steueranschluss des Druckbegrenzungsventils anliegenden Steuerdruckes.

Die Höhe des Steuerdruckes lässt sich erfindungsgemäß durch das Proportionalventil einstellen, das wiederum von der elektronischen Steuereinheit über einen elektrischen Steuerstrom in direkter Abhängigkeit von der Änderung der Motordrehzahl und/oder des Load-Signals des Motors ansteuerbar ist.

Bei einem derart ausgebildeten, erfindungsgemäßen Schiffsgetriebe ist es möglich, während des Einschaltvorganges der Lamellenkupplung den Verlauf des Betriebsdruckes über die Zeit elektrisch zu steuern. Erfindungsgemäß wird dabei der Druckaufbau nicht theoretisch ermittelt und danach starr beibehalten, sondern dynamisch in Abhängigkeit von der Änderung der Motordrehzahl und/oder des Load-Signals des Motors gesteuert. Der Druckaufbau zum Schließen der Lamellenkupplung wird bei jedem Schaltvorgang den gegebenen Bedingungen neu angepasst.

Die Druckaufbaukurve besitzt also im Gegensatz zum Stand der Technik nicht immer den gleichen starren Kurvenverlauf, sondern wird bei einzelnen Kupplungsvorgängen neu eingestellt. Dadurch können unterschiedliche Druckaufbaukurven zustande kommen.

Über einen derart angepassten Druckaufbau ist es möglich, einem beim Einschalten der Kupplung verursachten Drehzahlabfall des Motors entgegenzuwirken.

Eine Weiterbildung sieht vor, dass das Proportionalventil einen umgekehrt proportional zum elektrischen Steuerstrom hydraulischen Steuerdruck erzeugt.

Herkömmliche Proportionalventile erzeugen einen proportional zum elektrischen Steuerstrom hydraulischen Druck. Je größer der Steuerstrom, desto größer der Druck.

Die erfindungsgemäße Funktionsweise des Proportionalventils ist für die Sicherheit des Schiffsgetriebes und mithin für die gesamte Schiffssicherheit entscheidend. Bei einem möglichen Ausfall des elektrischen Steuerstromes, beispielsweise durch Kabelbruch, Spannungsausfall oder sonstige Störungen, fällt der Betriebsdruck nicht ab, da das Proportionalventil geschlossen und der maximale Steuerdruck am vorgesteuerten Druckreduzierventil anliegt. Ein maximaler Steuerdruck am Druckreduzierventil führt wiederum zu einem maximalen Betriebsdruck in der zur Lamellenkupplung führenden Druckölleitung. Dadurch wird ein Rutschen der Lamellenkupplung und ein Verbrennen der Lamellen verhindert.

Weiterhin ist vorgesehen, dass die hydraulische Steuerungsanordnung Mittel umfasst, die eine permanente Vorfüllung der Druckölleitungen zu den Lamellenkupplungen und der Lamellenkupplungen selbst ermöglichen.

Dadurch wird erreicht, dass beim Einschalten der Lamellenkupplung keine Schaltverzögerungen entstehen, wodurch eine dynamische Steuerung des Betriebsdrucks in Abhängigkeit der Änderung der Motordrehzahl und/oder der Änderung des Load-Signals des Motors sichergestellt wird.

Bei den bekannten Hydrauliksystemen entleeren sich beim Öffnen der Lamellenkupplung die mit Öl gefüllten Lamellenkupplungen und die mit ihnen verbundenen Druckölleitungen ganz oder teilweise. Beim Einschalten der Lamellenkupplung muss dieses sogenannte Totvolumen erst wieder aufgefüllt werden, was insbesondere bei großen Getrieben zu Schaltverzögerungen in Form von unerwünschten Totzeiten führt. Für eine dynamische Steuerung des Druckes während der Schaltphase sind solche Systeme unbrauchbar.

In einer vorteilhaften Ausgestaltung der Erfindung umfassen die Mittel, die eine permanente Vorfüllung der Druckölleitungen zu den Lamellenkupplungen und der Lamellenkupplungen selbst ermöglichen, eine Blende zur Festlegung des Vorfüll-Volumenstroms und ein Druckbegrenzungsventil zum Einstellen eines Vorfülldrucks.

Vorzugsweise ist der Vorfülldruck nicht größer als der zur Entlastung der Lamellen anliegende Federdruck und beträgt vorzugsweise am Druckbegrenzungsventil zum Einstellen des Vorfülldrucks ca. 0,5 bis 1 bar.

Dieser Druck führt noch nicht zum Anpressen der Lamellen, da er zum Überwinden des zur Entlastung der Lamellen anliegenden Federdruckes nicht ausreicht.

Eine Weiterbildung sieht vor, dass das Proportionalventil und das vorgesteuerte Druckbegrenzungsventil mit den Kupplungsanschlüssen verbunden sind.

Dadurch wird eine verbesserte Dynamik der Steuerung erreicht.

Weiterhin ist vorgesehen, dass das Steueröl aus dem Hauptstrom des Hydrauliksystems entnehmbar ist.

Dadurch wird erreicht, dass Steueröl und Schaltöl voneinander getrennt sind.

In einer vorteilhaften Ausgestaltung der Erfindung ist für jede Lamellenkupplung ein eigenes vorgesteuertes Druckbegrenzungsventil vorgesehen, wobei die Druckbegrenzungsventile parallel vom Proportionalventil ansteuerbar sind.

Dadurch wird eine noch bessere Dynamik erreicht. Nachteilig ist allerdings der apparative Aufwand.

Die vorgesteuerten Druckbegrenzungsventile sind nur für den Schalt-Ölvolumenstrom dimensioniert.

Eine Weiterbildung sieht vor, dass die elektronische Steuereinheit mit Sensormitteln verbunden ist, aus deren Messwerten und aus den Werten für den Kühlölvolumenstrom, für die Getriebeübersetzung sowie aus den geometrischen Kupplungsdaten die thermische Kupplungsbelastung in Echtzeit berechenbar ist.

Vorzugsweise umfassen die Sensormittel Sensoren zur Erfassung der Motordrehzahl, der Propellerdrehzahl und -drehrichtung, des Schaltöldrucks in der Kupplung und der Kühlöltemperatur.

Die elektronische Steuereinheit errechnet in Echtzeit die thermische Kupplungsbelastung aus der Motordrehzahl, der Propellerdrehzahl und Drehrichtung, dem Schaltöldruck in der Kupplung, der Kühlöltemperatur, dem Kühlölvolumenstrom, der Getriebeübersetzung und den geometrischen Kupplungsdaten.

Aus Motordrehzahl, Propellerdrehzahl und -richtung und der Getriebeübersetzung wird die Differenzdrehzahl f(t) zwischen den Innen- und Außen-Lamellen der Kupplung errechnet. Der Schaltöldruck f(t) bewirkt die Flächenpressung f(t) auf das Lamellenpaket. Aus Flächenpressung und Differenzdrehzahl werden Reibleistung und Reibarbeit über der Rutschzeit errechnet. Die angefallene Reibarbeit ist zu jedem Zeitpunkt der Rutschphase bekannt und wird mit dem zulässigen Wert verglichen. Der zulässige Wert ist keine feste Größe, sondern abhängig von der Kühlöltemperatur, dem Kühlölvolumenstrom, den geometrischen Kupplungsdaten und den vorangegangenen Schaltungen. Der Kühlölvolumenstrom kann über einen Sensor gemessen oder getriebebezogen als Parameter per Software eingegeben werden. Getriebeübersetzung und geometrische Kupplungsdaten werden ebenfalls per Software eingegeben bzw. der Datensatz wird ausgewählt.

Theoretisch sind nämlich Situationen denkbar, in denen unzulässig viel Reibwärme entstehen kann, z.B. bei einem Crash-Stop-Manöver mit relativ hoher Motordrehzahl.

Bei Erreichen von beispielsweise 80% der zulässigen thermischen Belastung kann über eine mit der elektronischen Steuereinheit verbundenen Alarmanlage ein Voralarm ausgelöst werden. Bei 100% thermischer Belastung erfolgt wahlweise Hauptalarm und das Schließen oder das Öffnen der Kupplung.

Die Erfindung betrifft außerdem ein Verfahren zur Vermeidung eines Motordrehzahlabfalls beim Einschalten der Lamellenkupplung des erfindungsgemäßen Schiffsgetriebes.

Das erfindungsgemäße Verfahren zeichnet sich dadurch aus, dass der Betriebsdruck bei jedem Einschalten der Lamellenkupplung derart in Abhängigkeit von der Drehzahländerung des Motors und/oder der Änderung des Load-Signals des Motors über die Zeit aufgebaut wird, dass dieser einer Motordrehzahländerung und/oder der Änderung des Load-Signals des Motors entgegenwirkt.

Vorzugsweise wirkt die elektronische Steuereinheit einer während des Einschaltens der Kupplung gemessenen Drehzahländerung und/oder Änderung des Load-Signals des Motors in der Weise entgegen, dass sie in Abhängigkeit der gemessenen Änderungen elektrische Steuersignale an das Steuermittel zur Einstellung des Betriebsdruckes abgibt, wodurch der Schlupfgrad der Lamellenkupplung verändert wird.

Die Eingangsgrößen für die elektronische Steuereinheit sind die Motordrehzahl und/oder das Load-Signal des Motors. Die elektronische Steuereinheit verarbeitet vorzugsweise unterschiedliche Load-Signale, z.B. CAN-Bus, 4-20 mA, 0-200 mA.

Der Eingang wird per Software entsprechend dem angeschlossenen Signal parametriert.

Während des Einschaltens der Lamellenkupplung verarbeitet die Steuereinheit die Änderungen von Motordrehzahl und/oder Load-Signal des Motors regelt den elektrischen Steuerstrom zum Proportionalventil derart, dass die dadurch bewirkte Druckänderung das übertragbare Drehmoment der Lamellenkupplung in dem Sinne beeinflusst, dass der Drehzahländerung bzw. Load-Signal-Änderung entgegengewirkt wird.

Dadurch wird ein bei einigen Motoren üblicher, starker Drehzahleinbruch vermieden. Bei optimaler Schaltzeit werden Schaltmomentspitzen reduziert.

Abhängig vom Leistungsvermögen des Dieselmotors im Teillastbereich und abhängig vom jeweiligen Schaltmanöver bei geringer Schiffsgeschwindigkeit oder Crash-Stop, ergeben sich unterschiedlich lange Rutschzeiten und unterschiedlich viel Reibwärme.

Alle erforderlichen Steuerparameter werden per Software eingestellt.

Wenn gemäß der Erfindung beim Aufbau der Druckaufbaukurve und beim Einkupplungsvorgang die jeweilige Änderung der Motordrehzahl und/oder Änderung des Load-Signals des Motors in den Kuppelvorgang einbezogen wird, erfolgt das Einkuppeln in vorteilhafter Weise sehr viel schonender und teilweise auch schneller als beim Stand der Technik.

Bei der Erfindung wird dem Motor praktisch immer gerade soviel an Leistung abverlangt bzw. das Einkuppeln erfolgt in der Weise, dass dem Motor immer das Maximum an im Teil-Last-Betrieb zur Verfügung stehender Leistung entnommen wird. Die Druckaufbaukurve - und damit der Einkuppelvorgang - wird also jeweils den gegebenen äußeren Parametern und Umständen automatisch angepasst, weshalb man die erfindungsgemäße Getriebeanordnung als "intelligentes Getriebe" bezeichnen kann.

Die elektronische Steuereinheit berechnet dabei die Reibwärme im Lamellenpaket während der Einschaltphase und überwacht damit die thermische Belastung der Lamellenkupplung.

Nachfolgend wird die Erfindung anhand von Ausführungsbeispielen erläutert, die in der Zeichnung dargestellt sind. In dieser zeigen:
- Fig. 1: eine schematische Übersichtsdarstellung des erfindungsgemäßen Schiffsgetriebes,
- Fig. 2: eine erste Ausgestaltung der erfindungsgemäßen hydraulischen Steuerungsanordnung,
- Fig. 3: eine zweite Ausgestaltung der erfindungsgemäßen hydraulischen Steuerungsanordnung,
- Fig. 4: eine dritte Ausgestaltung der erfindungsgemäßen hydraulischen Steuerungsanordnung,
- Fig. 5: eine vierte Ausgestaltung der erfindungsgemäßen hydraulischen Steuerungsanordnung und
- Fig. 6: eine Veränderung der Motordrehzahl beim Einschalten der Lamellenkupplung herkömmlicher und erfindungsgemäßer Schiffsgetriebe.

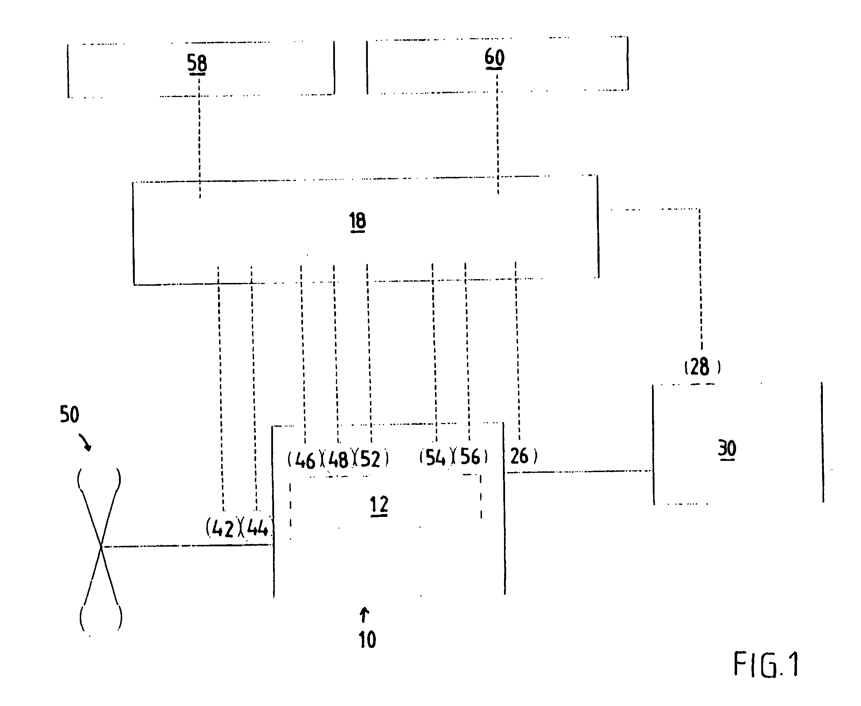

Fig. 1 zeigt eine schematische Übersichtsdarstellung des erfindungsgemäßen Schiffsgetriebes 10.

Das Schiffsgetriebe 10 umfasst eine hydraulische Steuerungsanordnung 12 mit regelbaren hier nicht dargestellten Lamellenkupplungen für Vorwärts- und Rückwärtsfahrt und eine elektronische Steuerungseinheit 18.

Die hydraulische Steuerungsanordnung 12 umfasst ein hier nicht dargestelltes, von der elektronischen Steuereinheit 18 elektrisch betätigbares Kupplungsschaltventil zum Einschalten der Vorwärts- und Rückwärtskupplung. Dazu gibt die elektronische Steuereinheit 18 Steuersignale 54 zum Betätigen des Kupplungsschaltventils in die Arbeitsstellung "Vorwärts" oder Steuersignale 56 zum Betätigen des Kupplungsschaltventils in die Arbeitsstellung "Rückwärts" ab.

Die elektronische Steuereinheit 18 ist mit einem Sensor zur Erfassung der Motordrehzahl 26 und einem Sensor zur Erfassung des Load-Signals 28 des Motors 30 verbunden.

Der zum Einschalten der Lamellenkupplungen erforderliche Betriebsdruck ist über ein Steuermittel einstellbar, das von der elektronischen Steuereinheit 18 über einen elektrischen Steuerstrom 52 ansteuerbar ist.

Außerdem ist die elektronische Steuereinheit 18 mit Sensormitteln verbunden, deren Messwerte in Echtzeit zur Berechnung der thermischen Kupplungsbelastung heranziehbar sind. Die Sensormittel umfassen Sensoren zur Erfassung der Motordrehzahl 26, der Propellerdrehzahl 42 und -drehrichtung 44, des Schaltöldrucks 46 in der Lamellenkupplung und der Kühlöltemperatur 48.

Die elektronische Steuereinheit 18 überwacht die thermische Belastung der Lamellenkupplung während des Schaltvorganges. Bei Erreichen einer unzulässigen thermischen Belastung wird ein Alarm über eine mit der elektronischen Steuereinheit 18 verbundenen Alarmanlage 58 ausgelöst. Vorteilhaft lässt sich die elektronische Steuereinheit 18 über eine Fernsteuerung 60 bedienen.

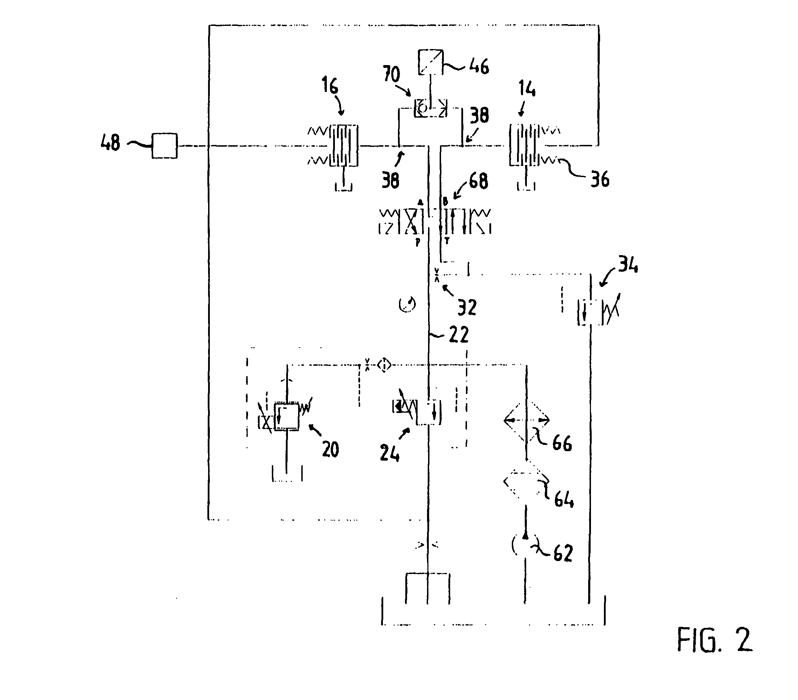

Die in Fig. 2 bis 5 dargestellte hydraulische Steuerungsanordnung für Schiffsgetriebe umfasst eine Pumpe 62 zur Erzeugung der hydraulischen Energie, einen Filter 64 zur Reinigung der Hydraulikflüssigkeit, einen Ölkühler 66 zur Abführung der Verlustwärme und ein Kupplungsschaltventil 68 für die Wahl zwischen der Fahrtrichtung "Vorwärts" und "Rückwärts". Mit dem Kupplungsschaltventil 68 ist eine Lamellenkupplung 14 für die Vorwärtsfahrt und eine Lamellenkupplung 16 für die Rückwärtsfahrt hydraulisch verbunden.

Bei dem Kupplungsschaltventil 68 handelt es sich um ein 3-Wegeventil, das elektrisch über die hier nicht dargestellte Steuereinheit des erfindungsgemäßen Schiffsgetriebes betätigbar ist.

Erfindungsgemäß umfasst die hydraulische Steuerungsanordnung eine Kombination aus wenigstens einem vorgesteuertem Druckbegrenzungsventil 24 und einem elektrisch betätigbaren Proportionalventil 20.

Die Lamellenkupplung 14, 16 umfasst mehrere Lamellenscheiben, von denen eine erste Anzahl im Eingriff mit der Antriebswelle des Motors und eine zweite Anzahl im Eingriff mit der Antriebs- bzw. Abtriebswelle für den Propeller ist.

Zum Schließen der Lamellenkupplung 14, 16 werden die Lamellenscheiben durch einen mittels des steuerbaren Druckbegrenzungsventils 24 einstellbaren Kupplungsöldruckes gegeneinander gepresst. Der Kupplungsöldruck wird auch als Schalt- oder Betriebsdruck bezeichnet.

Bei den herkömmlichen hydraulischen Steuerungsanordnungen können die Lamellenkupplungen 14, 16 und die zugehörigen Druckölleitungen in Neutralstellung des Kupplungsschaltventils 68 über die Verbindung A-T oder B-T ganz oder teilweise leer laufen.

Bei jedem Schaltvorgang muss dieses Totvolumen wieder aufgefüllt werden, was insbesondere bei großen Getrieben zu Schaltverzögerungen in Form von unerwünschten Totzeiten führt. Für eine dynamische Steuerung des Betriebsdruckes während der Schaltphase sind solche Systeme daher unbrauchbar.

Um dies zu verhindern weist die hydraulische Steuerungsanordnung 12 eine Blende 32 und ein Druckbegrenzungsventils 34 auf, durch die eine permanente Vorfüllung der Druckölleitungen zu den Lamellenkupplungen 14, 16 und der Lamellenkupplungen 14, 16 selbst gewährleistet wird.

Der Vorfülldruck wird am Druckbegrenzungsventil 34 eingestellt und ist nicht größer als der von wenigstens einer Rückstellfeder 36 zur Entlastung der Lamellenscheiben hervorgerufene Federdruck. Der Vorfülldruck beträgt vorzugsweise 0,5 bis 1 bar.

In Fig. 2 ist die Kombination aus wenigstens einem vorgesteuerten Druckbegrenzungsventil 24 und einem elektrisch betätigbaren Proportionalventil 20 mit der zum Kupplungsschaltventil führenden Druckölleitung 22 hydraulisch verbunden.

Nachteilig an dieser Anordnung ist, dass der am Druckreduzierventil 24 einstellbare Betriebsdruck nicht genau dem an der Lamellenkupplung 14, 16 anliegenden Betriebsdruck entspricht bzw. sich mit einer geringen Zeitverzögerung einstellt.

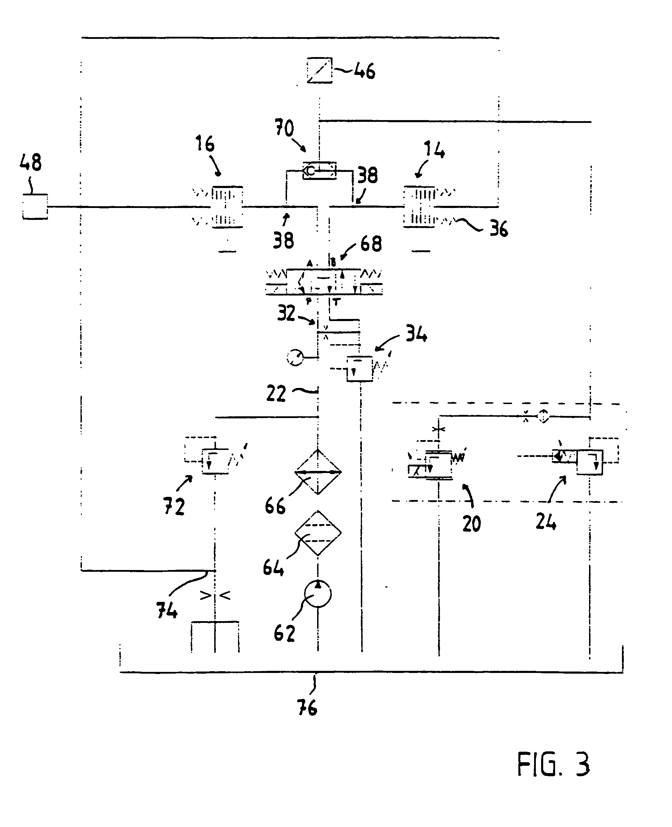

Eine Weiterbildung ist daher in Fig. 3 dargestellt, in der die erfindungsgemäße Ventilkombination aus Proportionalventil 20 und vorgesteuertem Druckbegrenzungsventil 24 direkt mit den Kupplungsanschlüssen 38 verbunden ist. Dabei ist die Ventilkombination über ein Wechselventil 70 an die beiden Lamellenkupplungen 14, 16 angeschlossen.

Durch diese Variante wird eine noch bessere Dynamik der Steuerung erreicht.

Zur Einstellung des Betriebsdruckes in Neutralstellung des Kupplungsschaltventils 68 ist ein Druckbegrenzungsventil 72 in den Hauptölstrom der Druckölleitung 22 eingefügt.

In dieser Anordnung ist das vorgesteuerte Druckbegrenzungsventil 24 nur für den Schalt-Ölvolumenstrom zu dimensionieren.

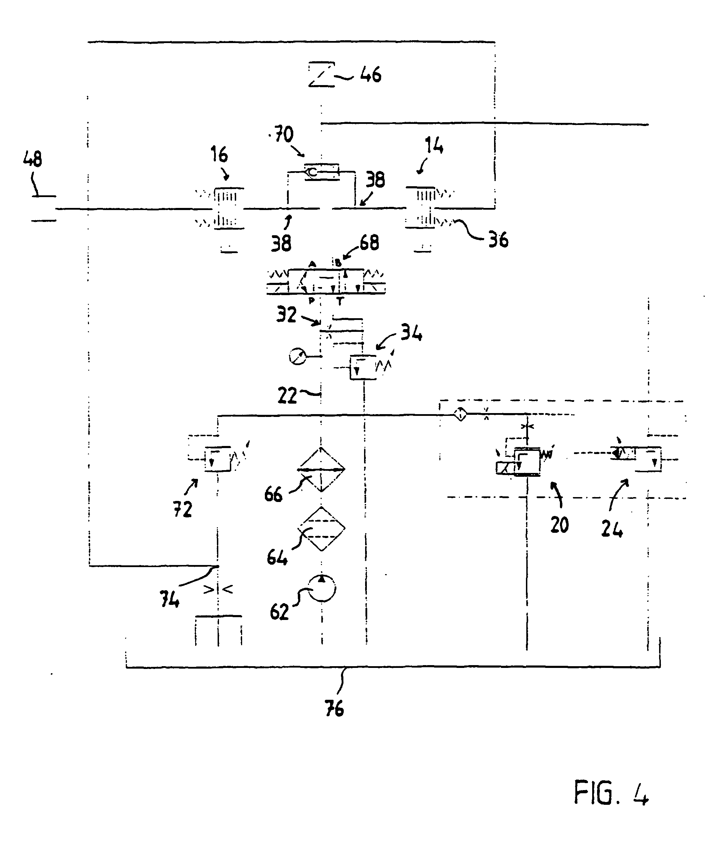

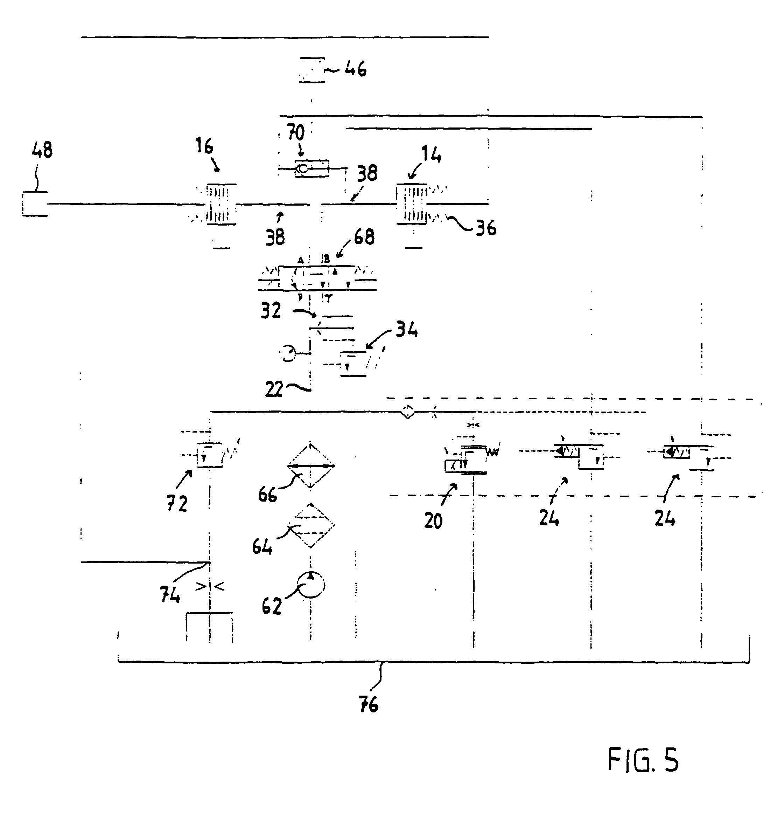

Fig. 4 und 5 zeigen zwei weitere Varianten der Anordnung der Ventilkombination aus Proportionalventil 20 und vorgesteuertem Druckbegrenzungsventil 24.

Fig. 4 unterscheidet sich von Fig. 3 dadurch, dass das Steueröl aus dem Hauptstrom des Hydrauliksystems entnommen wird. Steueröl und Schaltöl sind somit getrennt.

Gemäß Fig. 5 wird für jede Lamellenkupplung ein eigenes vorgesteuertes Druckbegrenzungsventil 24 verwendet. Beide Druckbegrenzungsventil 24 werden parallel vom Proportionalventil 20 angesteuert.

Die in Fig. 5 angeordneten, vorgesteuerten Druckbegrenzungsventile 24 brauchen nur für den Schalt-Ölvolumenstrom dimensioniert werden.

Das während eines Schaltvorganges über das vorgesteuerte Druckbegrenzungsventil 24 fließende Öl fließt - wie in Fig. 3 bis 5 dargestellt - direkt in die Getriebeölwanne 76 zurück. Es ist aber auch möglich, das über das vorgesteuerte Druckbegrenzungsventil 24 zurückfließende Öl direkt in die Schmier-Kühlölleitung 74 einzuspeisen.

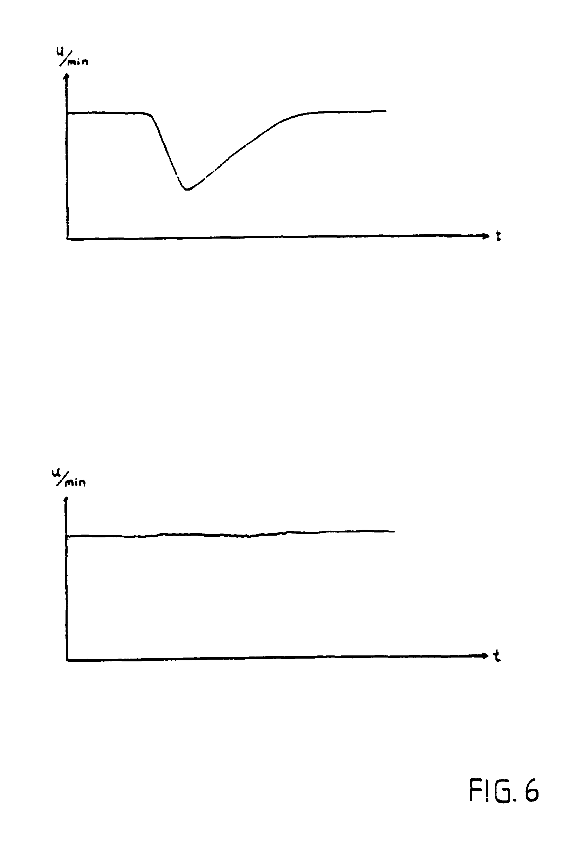

Fig. 6 zeigt eine Veränderung der Motordrehzahl beim Einschalten der Lamellenkupplung herkömmlicher und erfindungsgemäßer Schiffsgetriebe.

Die obere in der Fig. 6 angegebene Graphik zeigt schematisch den beim Einschalten herkömmlicher Lamellenkupplungen verursachten Motordrehzahlabfall.

Die untere in Fig. 6 angegebene Graphik zeigt schematisch die beim Einschalten der Lamellenkupplung aufgrund des erfindungsgemäßen Verfahrens vergleichsweise konstant bleibende Motordrehzahl.

## Patentansprüche

1. Schiffsgetriebe (10), insbesondere Wendegetriebe, aus einer hydraulischen Steuerungsanordnung (12) mit regelbaren Lamellenkupplungen (14, 16) für Vorwärts- und Rückwärtsfahrt, bei denen der zum Einschalten der Lamellenkupplungen (14, 16) erforderliche Betriebsdruck über Steuermittel in Abhängigkeit wählbarer Parameter einstellbar ist, und aus einer elektronischen Steuereinheit (18) zur Erfassung und Verarbeitung wenigstens eines Betriebsparameters sowie zur Ansteuerung der Steuermittel, **dadurch gekennzeichnet, dass** das Steuermittel ein Proportionalventil (20) und ein an der zur Lamellenkupplung (14, 16) führenden Druckölleitung angeordnetes vorgesteuertes Druckbegrenzungsventil (24) zur Einstellung des gewünschten Betriebsdruckes umfasst, wobei das Proportionalventil (20) durch einen elektrischen Steuerstrom der elektronischen Steuereinheit (18) ansteuerbar ist und das Druckbegrenzungsventil (24) durch einen vom Proportionalventil (20) erzeugten Steuerdruck betätigbar ist, und dass die elektronische Steuereinheit (18) mit einem Sensor (26) zur Erfassung der Motordrehzahl und/oder mit einem Sensor (28) zur Erfassung des Load-Signals eines Motors (30) verbunden ist.

2. Schiffsgetriebe (1) nach Anspruch 1, **dadurch gekennzeichnet, dass** das Proportionalventil (20) einen umgekehrt proportional zum elektrischen Steuerstrom hydraulischen Steuerdruck erzeugt.

3. Schiffsgetriebe (10) nach Anspruch 1 oder 2, **dadurch gekennzeichnet, dass** die hydraulische Steuerungsanordnung (12) Mittel umfasst, die eine permanente Vorfüllung der Druckölleitungen (38) zu den Lamellenkupplungen (14, 16) und der Lamellenkupplungen (14, 16) selbst ermöglichen.

4. Schiffsgetriebe (10) nach Anspruch 3, **dadurch gekennzeichnet, dass** die Mittel eine Blende (32) zur Festlegung des Vorfüll-Volumenstroms und ein Druckbegrenzungsventil (34) zum Einstellen eines Vorfülldrucks umfassen.

5. Schiffsgetriebe (10) nach Anspruch 3 oder 4, **dadurch gekennzeichnet, dass** der Vorfülldruck nicht größer als der von wenigstens einer Rückstellfeder (36) zur Entlastung der Lamellen anliegende Federdruck ist.

6. Schiffsgetriebe (10) nach einem der Ansprüche 1 bis 5, **dadurch gekennzeichnet, dass** das Proportionalventil (20) und das vorgesteuertes Druckbegrenzungsventil (24) mit den Kupplungsanschlüssen (38) verbunden sind.

7. Schiffsgetriebe (10) nach einem der Ansprüche 1 bis 6, **dadurch gekennzeichnet, dass** das Steueröl aus dem Hauptstrom der Hydrauliksteuerungsanordnung (12) entnehmbar ist.

8. Schiffsgetriebe (10) nach einem der Ansprüche 1 bis 7, **dadurch gekennzeichnet, dass** für jede Lamellenkupplung (14, 16) ein eigenes vorgesteuertes Druckbegrenzungsventil (24) vorgesehen ist, wobei die Druckbegrenzungsventile (24) parallel vom Proportionalventil (20) ansteuerbar sind.

9. Schiffsgetriebe (10) nach einem der Ansprüche 1 bis 8, **dadurch gekennzeichnet, dass** die elektronische Steuereinheit (18) mit Sensormitteln verbunden ist, deren Messwerte in Echtzeit zur Berechnung der thermischen Kupplungsbelastung heranziehbar sind.

10. Schiffsgetriebe (10) nach Anspruch 9, **dadurch gekennzeichnet, dass** die Sensormittel Sensoren zur Erfassung der Motordrehzahl (26), der Propellerdrehzahl (42) und-drehrichtung (44), des Schaltöldrucks (46) in der Lamellenkupplung (14, 16) und der Kühlöltemperatur (48) umfassen.

11. Verfahren zur Vermeidung eines Motordrehzahlabfalls beim Einschalten der Lamellenkupplung (14, 16) eines Schiffsgetriebes (10) nach dem Oberbegriff des Anspruchs 1, **dadurch gekennzeichnet, dass** der Betriebsdruck bei jedem Einschalten der Lamellenkupplung (14, 16) derart in Abhängigkeit von der Drehzahländerung des Motors (30) und/oder zusätzlich der Änderung des Load-Signals des Motors (30) aufgebaut wird, dass dieser einer Motordrehzahländerung und/oder der Änderung des Load-Signals des Motors (30) entgegenwirkt.

12. Verfahren nach Anspruch 11, **dadurch gekennzeichnet, dass** die elektronische Steuereinheit (18) einer während des Einschaltens der Lamellenkupplung (14, 16) gemessenen Drehzahländerung und/oder Änderung des Load-Signals des Motors (30) in der Weise entgegenwirkt, dass sie in Abhängigkeit der gemessenen Änderungen elektrische Steuersignale an das Steuermittel zur Einstellung des Schaltdrucks abgibt, wodurch der Schlupfgrad der Lamellenkupplung verändert wird.

13. Verfahren nach Anspruch 11 oder 12, **dadurch gekennzeichnet, dass** die thermische Belastung der Lamellenkupplung (14, 16) durch die elektronische Steuereinheit (18) überwacht wird.

## Claims

1. Marine gear (10), particularly reversing gear, with a hydraulic steering system (12) with regulatable disk clutches (14, 16) for forward and reverse. travel, in which the operating pressure necessary for engaging the disk clutches (14, 16) can be adjusted via control means as a function of selectable parameters, and with an electronic control unit (18) for establishing and processing at least one operating parameter, as well as for controlling the control means, **characterized in that** the control means comprise a proportional valve (20) and a servo-controlled pressure limiting valve (24) located on the pressure oil line leading to the disk clutch (14, 16) for adjusting the desired operating pressure, the proportional valve (20) being controllable by an electric control current of the electronic control unit (18) and the pressure limiting valve (24) is operable by a control pressure produced by the proportional valve (20), and that the electronic control unit (18) is connected to a sensor (26) for determining the engine speed and/or to a sensor (28) for determining the load signal of an engine (30).

2. Marine gear (1) according to claim 1, **characterized in that** the proportional valve (20) produces a hydraulic control pressure inversely proportional to the electric control current.

3. Marine gear (10) according to claim 1 or 2, **characterized in that** the hydraulic steering system (12) comprises means permitting a permanent prefilling of the pressure oil lines (38) to the disk clutches (14, 16) and of the actual disk clutches (14, 16).

4. Marine gear (10) according to claim 3, **characterized in that** the means comprise a shield (32) for fixing the prefilling volume flow and a pressure limiting valve (34) for adjusting a prefilling pressure.

5. Marine gear (10) according to claim 3 or 4, **characterized in that** the prefilling pressure is no higher than the spring pressure applied by at least one return spring (36) for relieving the disks.

6. Marine gear (10) according to one of the claims 1 to 5, **characterized in that** the proportional valve (20) and the servo-controlled pressure limiting valve (24) are connected to the clutch connections (38).

7. Marine gear (10) according to one of the claims 1 to 6, **characterized in that** the control oil can be taken from the main flow of the hydraulic steering system (12).

8. Marine gear (10) according to one of the claims 1 to 7, **characterized in that** for each disk clutch (14, 16) is provided an independent, servo-controlled pressure limiting valve (24), the pressure limiting valves (24) being controllable in parallel by the proportional valve (20).

9. Marine gear (10) according to one of the claims 1 to 8, **characterized in that** the electronic control unit (18) is connected to sensor means, whose measured values can be used in real time for calculating the thermal clutch load.

10. Marine gear (10) according to claim 9, **characterized in that** the sensor means comprise sensors for determining the engine speed (26), the propeller speed (42) and propeller rotation direction (44), the operating oil pressure (46) in the disk clutch (14, 16) and the cooling oil temperature (48).

11. Method for avoiding an engine speed drop on engaging the disk clutch (14, 16) of a marine gear (10) according to the preamble of claim 1, **characterized in that**, for each engagement of the disk clutch (14, 16), the operating pressure is built up as a function of the speed change of the engine (30) and/or additionally the change to the load signal of the engine (30) in such a way that it counteracts an engine speed change and/or a change to the load signal of the engine (30).

12. Method according to claim 11, **characterized in that** the electronic control unit (18) counteracts a speed change measured during the engagement of the disk clutch (14, 16) and/o4 a change to the load signal of the engine (30) in such a way that, as a function of the-measured changes, it delivers electric control signals to the control means for adjusting the operating pressure, so that the degree of slip of the disk clutch is modified.

13. Method according to claim 11 or 12, **characterized in that** the thermal loading of the disk clutch (14, 16) is monitored by the electronic control unit (18).

## Revendications

1. Engrenage marin (10), en particulier engrenage de renversement, comprenant un arrangement de commande hydraulique (12) avec des embrayages à disques multiples (14, 16) pour la marche avant et la marche arrière, la pression de service nécessaire à l'enclenchement des embrayages à disques multiples (14, 16) pouvant être réglée par l'intermédiaire de moyens de commande en fonction de paramètres pouvant être sélectionnés, ainsi qu'une unité de commande électronique (18) pour la saisie et le traitement d'un paramètre de service au moins, ainsi que pour l'excitation des moyens de commande, **caractérisé en ce que** le moyen de commande comprend une soupape proportionnelle (20) et un limiteur de pression (24) à soupape pilote, disposé sur la conduite d'huile sous pression menant aux embrayages à disques multiples (14, 16) pour le réglage de la pression de service souhaitée, la soupape proportionnelle (20) pouvant être excitée par un courant de commande électrique de l'unité de commande électronique (18) et le limiteur de pression (24) pouvant être actionné par une pression de commande produite par la soupape proportionnelle (20), et **en ce que** l'unité de commande électronique (18) est reliée à un détecteur (26) destiné à détecter le nombre de tours et/ou à un détecteur (28) destiné à détecter le signal de chargement d'un moteur (30).

2. Engrenage marin (1) suivant la revendication 1, **caractérisé en ce que** la soupape proportionnelle (20) produit une pression de commande hydraulique inversement proportionnelle au courant de commande électrique.

3. Engrenage marin (10) suivant la revendication 1 ou 2, **caractérisé en ce que** l'arrangement de commande hydraulique (12) comprend des moyens qui permettent un préremplissage non seulement des conduites d'huile sous pression (38) menant aux embrayages à disques multiples (14, 16), mais encore des embrayages à disques multiples eux-mêmes.

4. Engrenage marin (10) suivant la revendication 3, **caractérisé en ce que** les moyens comprennent un obturateur (32) pour fixer le débit volumétrique de préremplissage et un limiteur de pression (34) pour régler la pression de préremplissage.

5. Engrenage marin (10) suivant la revendication 3 ou 4, **caractérisé en ce que** la pression de préremplissage n'est pas supérieure à la pression au moins d'un ressort de rappel (36), appliquée pour décharger les disques.

6. Engrenage marin (10) suivant une des revendications 1 à 5, **caractérisé en ce que** la soupape proportionnelle (20) et le limiteur de pression à soupape pilote (24) sont reliés aux raccords de l'embrayage (38).

7. Engrenage marin (10) suivant une des revendications 1 à 6, **caractérisé en ce que** l'huile de commande peut être prélevée sur le courant principal de l'arrangement de commande hydraulique (12).

8. Engrenage marin (10) suivant une des revendications 1 à 7, **caractérisé en ce que** pour chaque embrayage à disques multiples (14,16) est prévu respectivement un limiteur de pression à soupape pilote (24), les soupapes pilotes (24) pouvant être excitées parallèlement par la soupape proportionnelle (20).

9. Engrenage marin (10) suivant une des revendications 1 à 8, **caractérisé en ce que** l'unité de commande électronique (18) est reliée à des moyens de détection, dont les valeurs de mesure en temps réel peuvent servir au calcul de la charge thermique de l'embrayage.

10. Engrenage marin (10) suivant la revendication 9, **caractérisé en ce que** les moyens de détection comprennent des détecteurs servant à détecter le nombre de tours du moteur (26), le nombre de tours et le sens de rotation de l'hélice (42), la pression de l'huile commande (46) dans l'embrayage à disques multiples (14,16) et la température de l'huile de refroidissement.

11. Procédé destiné à éviter la baisse du nombre de tours du moteur lors de l'enclenchement de l'embrayage à disques multiples (14, 16) d'un engrenage marin (10) suivant le préambule de la revendication 1, **caractérisé en ce que** la pression de service à chaque enclenchement de l'embrayage à disques multiples (14, 16) est montée en fonction du changement du nombre de tours du moteur (30) et/ou, en plus, de la modification du signal de chargement du moteur (30), de manière qu'elle soit antagoniste à un changement du nombre de tours du moteur et/ou à une modification du signal de chargement du moteur (30).

12. Procédé suivant la revendication 11, **caractérisé en ce que** l'unité de commande électronique (18) est antagoniste à un changement du nombre de tours mesuré et/ou à une modification du signal de chargement du moteur (30) pendant l'enclenchement de l'embrayage à disques multiples, de manière qu'en fonction des changements mesurés, elle envoie des signaux de commande électriques au moyen de commande pour le réglage de la pression de commande, ce qui modifie le degré de glissement de l'embrayage à disques multiples.

13. Procédé suivant la revendication 11 ou 12, **caractérisé en ce que** la charge thermique de l'embrayage à disques multiples (14, 16) est surveillée par l'unité de commande électronique (18).
